# EUROPÄISCHE PATENTANMELDUNG

(11) **EP 3 865 594 A1**
(43) Veröffentlichungstag der Anmeldung: **18.08.2021**
(21) Anmeldenummer: 20156696.5
(22) Anmeldetag: 11.02.2020
(51) Int. Cl.: C21B 7/20, C21C 5/52, F27B 1/20, F27B 3/18, F27D 3/00

(54) **SCHACHTVERSCHLUSS FÜR EINEN SCHMELZOFEN SOWIE VERFAHREN ZUM BETREIBEN EINES SCHACHTVERSCHLUSSES**

(71) Anmelder: Primetals Technologies Germany GmbH, 91058 Erlangen (DE)
(72) Erfinder: Heinemann, Carlo, 77656 Offenburg (DE); Huber, Hansjörg, 77694 Kehl (DE); Mueller, Alexander, 77652 Offenburg (DE); Schmid, Michael, 77781 Biberach/ Baden (DE); Sucher, Tobias, 77830 Bühlertal (DE)
(74) Vertreter: Metals@Linz

(57) **Zusammenfassung**

Die Erfindung betrifft einen Schachtverschluss (22), insbesondere Schieberklappenverschluss (22), zum wiederholbaren Öffnen und Schließen einer Beschickungsöffnung (12) eines Schmelzofens, umfassend eine an/auf der Beschickungsöffnung (12) einrichtbare Dichtzarge (200) und einen translatorisch zwischen einer Offenstellung und einer Schließstellung (S) des Schachtverschlusses (22) gegenüber der Dichtzarge (200) hin- und herbewegbaren Schachtschieber (300) zum Öffnen und Schließen der Beschickungsöffnung (12), wobei für die und/oder in der Schließstellung (S) wenigstens ein Abschnitt einer zwischen der Dichtzarge (200) und dem Schachtschieber (300) einrichtbaren und/oder eingerichteten Spaltdichtung (23) gegenüber einer Ebene der Beschickungsöffnung (12) schief verläuft.

## Beschreibung

Die Erfindung betrifft einen Schachtverschluss, insbesondere einen Schieberklappenverschluss, zum wiederholbaren Öffnen und Schließen einer Beschickungsöffnung eines Schmelzofens. Ferner betrifft die Erfindung ein Verfahren zum Betreiben eines Schachtverschlusses, insbesondere eines Schieberklappenverschlusses, zum wiederholbaren Schließen und Öffnen einer Beschickungsöffnung eines Schmelzofens. Des Weiteren betrifft die Erfindung eine Positioniereinrichtung für einen Materialkorb und zum Beschicken eines Schmelzofens, sowie einen Schmelzofen, insbesondere einen Elektrolichtbogen-Schmelzofen.

Ein Elektrolichtbogen-Schmelzofen (englisch: Electric Arc Furnace (EAF)) wird als eine Großanlage zum industriellen Einschmelzen von Stahlschrott verwendet, um in einem Recyclingprozess Stahl wiederzugewinnen. Ein derartiger Schmelzofen weist ein Schmelzgefäß auf, in welchem der Stahlschrott geschmolzen und prozessiert wird. Das Schmelzgefäß ist z. B. als ein sogenanntes Untergefäß ausgebildet oder kann neben einem Untergefäß ein Obergefäß mit einem bzw. als einen Schacht aufweisen. Im zweiten Fall spricht man auch von einem Schachtofen. Der Schacht dient der Beschickung des eigentlichen Schmelzgefäßes und einer Vorwärmung einer zu schmelzenden Charge. Eine Beschickung des Schachts erfolgt mittels eines Schrägaufzugs oder eines Krans.

D. h. für einen Betrieb eines solchen Schmelzofens wird gelagerter Stahlschrott in einen Materialcontainer eines Schrägaufzugs oder in einen Materialkorb eines Krans eingefüllt. Ist der Materialcontainer oder der Materialkorb in richtiger Position über dem Schmelzofen, öffnet ein Schachtverschluss eine Beschickungsöffnung des Schmelzofens und der Stahlschrott kann in den Schmelzofen fallen. Ist der Schmelzofen mittels eines Materialcontainers eines Schrägaufzugs beschickbar, so weist der Schachtverschluss meist eine schwenkbare Schachtklappe auf. Ist der Schmelzofen mittels eines Materialkorbs eines Krans beschickbar, so weist der Schachtverschluss meist einen verlagerbaren Schachtschieber auf.

Eine schwenkbare Schachtklappe eines Schachtverschlusses benötigt für ihr Öffnen einen Bauraum nach oben, weswegen eine Schachtklappe im Wesentlichen ausschließlich in einem Zusammenhang mit einem Schrägaufzug eingesetzt wird. - Ein verlagerbarer Schachtschieber eines Schachtverschlusses kann in einem Vergleich mit einer Schachtklappe deutlich flacher bauen und wird im Wesentlichen ausschließlich in einem Zusammenhang mit einem Kran eingesetzt, wobei horizontale Dichtflächen zum Einsatz kommen. Horizontale Dichtflächen begünstigen aufliegenden Stahlschrott, der eine Funktion des Schachtschiebers deutlich behindern kann und somit einen Falschlufteintrag in den Schmelzofen begünstigt.

Die WO 2011/003656 A1 offenbart eine Positioniereinrichtung über einem Schacht eines Schmelzofens, für einen Materialkorb eines Krans zum Beschicken des Schmelzofens mit Stahlschrott. Zwischen der Positioniereinrichtung und einer Beschickungsöffnung des Schachts ist ein als translatorischer Schachtschieber ausgebildeter Schachtverschluss eingerichtet, mittels welchem die Beschickungsöffnung wiederholbar geschlossen und geöffnet werden kann. Der Schachtschieber umfasst seitlich an der Beschickungsöffnung zwei einander gegenüberliegende Führungsschienen, auf welchen der Schachtschieber vor und wieder zurück bewegbar ist. Eine Abdichtung der Beschickungsöffnung erfolgt dabei über einander direkt benachbarte, zueinander beabstandete horizontale Ränder der Beschickungsöffnung und des Schachtschiebers.

Es ist eine Aufgabe der Erfindung einen verbesserten Schachtverschluss für einen Schmelzofen, insbesondere einen Elektrolichtbogen-Schmelzofen, anzugeben. Hierbei soll der Schachtverschluss einen Falschlufteintrag in den Schmelzofen und somit eine Energieeffizienz des Schmelzofens verbessern helfen. Des Weiteren soll der Schachtverschluss in einem Betrieb des Schmelzofens selbständig zuverlässig arbeiten, ohne dass ein Werker den Schachtverschluss bei seiner bestimmungsgemäßen Funktion unterstützen muss. Ferner ist es analog dazu eine Aufgabe der Erfindung, eine verbesserte Positioniereinrichtung für einen Materialkorb eines Krans und zum Beschicken eines Schmelzofens, sowie einen verbesserten Schmelzofen, insbesondere einen verbesserten Elektrolichtbogen-Schmelzofen, anzugeben.

Die Aufgabe der Erfindung ist mittels eines Schachtverschlusses, insbesondere eines Schieberklappenverschlusses, zum wiederholbaren Öffnen und Schließen einer Beschickungsöffnung eines Schmelzofens; durch ein Verfahren zum Betreiben eines Schachtverschlusses, insbesondere eines Schieberklappenverschlusses, zum wiederholbaren Schließen und Öffnen einer Beschickungsöffnung eines Schmelzofens; mittels einer Positioniereinrichtung für einen Materialkorb und zum Beschicken eines Schmelzofens; und mittels eines Schmelzofens, insbesondere eines Elektrolichtbogen-Schmelzofens gelöst. - Vorteilhafte Weiterbildungen, zusätzliche Merkmale und/oder Vorteile der Erfindung ergeben sich aus den abhängigen Ansprüchen und der folgenden Beschreibung.

Der erfindungsgemäße Schachtverschluss umfasst eine an/auf der Beschickungsöffnung einrichtbare Dichtzarge und einen translatorisch zwischen einer Offenstellung und einer Schließstellung des Schachtverschlusses gegenüber der Dichtzarge hin- und herbewegbaren Schachtschieber zum Öffnen und Schließen der Beschickungsöffnung, wobei für die und/oder in der Schließstellung genau oder wenigstens ein Abschnitt einer zwischen der Dichtzarge und dem Schachtschieber einrichtbaren und/oder eingerichteten Spaltdichtung gegenüber einer Ebene der Beschickungsöffnung schief verläuft. - Hierdurch kann wenigstens ein Dichtspalt (Spaltdichtung) im Schachtverschluss in dessen Schließstellung klein gehalten werden, was eine Energieeffizienz des Schmelzofens und dessen Emissionen verbessert.

Unter dem Begriff Spaltdichtung ist eine gegenseitig direkt benachbarte, konstruktive Ausgestaltung der Dichtzarge und des Schachtschiebers, also des Schachtverschlusses für bzw. in dessen Schließstellung, verstanden, welche die Aufgabe hat, einen zu großen und somit ungewollten Stoffübergang über den Schachtverschluss hinweg von einer Umgebung, z. B. der Umwelt, in den Schacht bzw. vom Schacht in dessen Umgebung zu begrenzen. Die erfindungsgemäß einrichtbare (Ab-)Dichtung zwischen der Dichtzarge und dem Schachtschieber als Spaltdichtung ist dabei ferner bevorzugt als eine statische und einfache Parallelflächen-Spaltdichtung ausgebildet, wobei die die Spaltdichtung konstituierenden Abschnitte der Dichtzarge und des Schachtschiebers einander bereichsweise berühren bzw. diese bereichsweise aneinander ansitzen können.

Für die und/oder in der Schließstellung können genau zwei, wenigstens zwei oder im Wesentlichen alle (meist vier) Abschnitte der zwischen der Dichtzarge und dem Schachtschieber einrichtbaren und/oder eingerichteten Spaltdichtung gegenüber einer Ebene der Beschickungsöffnung schief verlaufen. In diesen ersten beiden Fällen sowie in obigem Fall kann auch von einer teilweise umlaufenden, ggf. unterbrochenen, konischen Spaltdichtung, und im letzten Fall kann auch von einer vollständig umlaufenden, ggf. unterbrochenen, konischen Spaltdichtung gesprochen werden.

Ferner soll mit einer gegenüber der Ebene der Beschickungsöffnung schief verlaufenden Spaltdichtung eine Dichtung verstanden sein, bei welcher genau ein, wenigstens ein, genau zwei, wenigstens zwei oder im Wesentlichen alle (meist vier) Abschnitte der Spaltdichtung weder im Wesentlichen parallel zur Ebene der Beschickungsöffnung noch in einem im Wesentlichen rechten Winkel dazu liegen. D. h. das Adjektiv 'schief' schließt dabei sowohl einen ca. 0°/180°-Winkel als auch einen ca. 90°/270°-Winkel einer flächigen Erstreckung des betreffenden Abschnitts der Spaltdichtung bezüglich der Ebene der Beschickungsöffnung aus. Eine andere flächige Erstreckung der Spaltdichtung kann ggf. jedoch einen solchen Winkel aufweisen.

Für die und/oder in der Schließstellung kann der betreffende Abschnitt oder können die betreffenden Abschnitte der zwischen der Dichtzarge und dem Schachtschieber einrichtbaren und/oder eingerichteten Spaltdichtung gegenüber einer horizontalen Ebene und gegenüber einer vertikalen Ebene schief verlaufen. Eine Längserstreckung und/oder eine Quererstreckung eines Querschnitts, also idealisiert insbesondere ein langgestrecktes Rechteck oder ein langgestrecktes Parallelogramm, des wenigstens einen Abschnitts der Spaltdichtung, verläuft dabei weder im Wesentlichen parallel noch im Wesentlichen senkrecht zur Ebene der Beschickungsöffnung bzw. zur horizontalen (rechter Winkel zur Richtung der Gravitationskraft) und vertikalen Ebene (Richtung der Gravitationskraft).

Bevorzugte Winkel der Längserstreckung und/oder der Quererstreckung der Spaltdichtung bezüglich der Ebene der Beschickungsöffnung bzw. zur horizontalen oder vertikalen Ebene können ca. 30° bis ca. 70°, ca. 40° bis ca. 60°, ca. 45° bis ca. 55° oder ca. 50° betragen. - Gemäß der Erfindung ist der Schachtschieber insbesondere bis hin zu seinen Dichtflächen (vgl. u.) und/oder Dichtsitzen (vgl. u.) bzw. bis hin zur Spaltdichtung in der Schließstellung fluiddicht geschlossen (Dichtplatte).

Eine allgemeine Form wie sich in der Schließstellung des Schachtverschlusses zwischen der Dichtzarge und dem Schachtschieber die Spaltdichtung einrichtet, ist, dass einander direkt benachbarte Ränder die wenigstens teilweise oder vollständig umlaufende Spaltdichtung zwischen sich ausbilden. Hierbei kann eine nach außen bzw. von außen abzudichtende Fläche innerhalb der Dichtzarge, unter welcher sich die eigentliche Beschickungsöffnung befindet, beliebig geformt ((teil-)polygonal und/oder (teil-)rund) sein.

Die eigentliche Dichtzarge und der eigentliche Schachtschieber können im Wesentlichen rechteckig ausgebildet sein. In der Schließstellung können einander direkt benachbarte Ränder, Dichtflächen und/oder Dichtsitze der Dichtzarge und des Schachtschiebers zueinander im Wesentlichen komplementär ausgebildet sein. Hierbei können die eigentliche Dichtzarge und der eigentliche Schachtschieber natürlich auch im Wesentlichen quadratisch ausgebildet sein.

Da bei einer Ausführungsform des Schachtverschlusses mit rechteckiger Dichtzarge und rechteckigem Schachtschieber, von der Offenstellung ausgehend, der Schachtschieber von lediglich einer Seite kommend auf/in die Dichtzarge einschiebbar ist, ergeben sich zwei mal zwei ausgezeichnete Abschnitte der Spaltdichtung. Dies sind einerseits die beiden Abschnitte der Spaltdichtung, die im Wesentlichen in einem rechten Winkel zur Bewegungsrichtung des Schachtschiebers liegen, und andererseits die beiden Abschnitte der Spaltdichtung die im Wesentlichen parallel zur Bewegungsrichtung des Schachtschiebers liegen.

Erstere sind als Dichtsitze, also jeweils als ein vorderer und hinterer Dichtsitz sowohl der Dichtzarge als auch des Schachtschiebers bezeichnet. D. h. also vier Dichtsitze, die in der Schließstellung zwei Abschnitte der Spaltdichtung einrichten können. Der Begriff Dichtsitz ist deswegen gewählt, weil hier der Schachtschieber auf die Dichtzarge mechanisch auftreffen kann und in Ausführungsformen auch soll, um einen Durchmesser der Spaltdichtung klein zu machen. D. h. die beteiligten Dichtflächen können aneinander dicht-ansitzen, daher der Begriff Dichtsitz; und nicht gedacht z. B. als ein mechanischer Sitz für beispielsweise eine Elastomerdichtung. Gemäß der Erfindung ist ein Luftspalt als eigentliche Spaltdichtung realisiert.

Letztere sind als Dichtflächen, also jeweils als eine seitliche rechte Dichtfläche und eine seitliche linke Dichtfläche sowohl der Dichtzarge als auch des Schachtschiebers bezeichnet. D. h. also vier Dichtflächen, die in der Schließstellung zwei Abschnitte der Spaltdichtung einrichten können und die zusammen mit den obigen zwei Abschnitten die wenigstens teilweise oder vollständig umlaufende Spaltdichtung bilden. Der Begriff Dichtfläche ist deswegen gewählt, weil hier der Schachtschieber an der Dichtzarge mechanisch entlanggleiten ohne dabei, wie oben, mechanisch auftreffen kann. Die betrachteten Abschnitte der eingerichteten Spaltdichtung können durch eine Bewegung des Schachtschiebers weder verkleinert noch vergrößert werden (einmal vom Ausrücken der Spaltdichtung beim Öffnen des Schachtschiebers abgesehen).

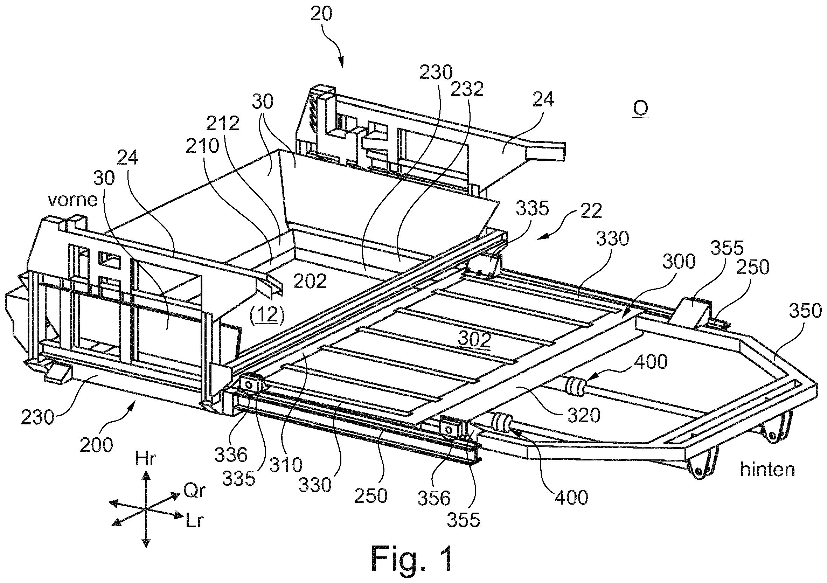

Die relativen Lageangeben 'vorne' und 'hinten' beziehen sich dabei auf ein Schließprofil des Schachtschiebers, also dasjenige Profil des Schachtschiebers, dass beim Schließen des Schachtverschlusses über die Beschickungsöffnung hinwegfährt und das als vorderes Profil der Dichtzarge bezeichnet ist (vgl. a. Fig. 1 bis 4). Hierdurch ist das hintere Profil der Dichtzarge definiert und es ergeben sich in Analogie dazu die relativen Lageangeben 'vorne' und 'hinten' in Bezug auf den Schachtverschluss. Eine Peripherie in einem rechten Winkel dazu ist mit dem Begriff 'seitlich' gekennzeichnet.

Der Schachtschieber kann mit seiner Dichtplatte über einem hinteren Profil der Dichtzarge im Schachtverschluss eingerichtet sein. Ferner kann die Dichtplatte des Schachtschiebers über dem hinteren Profil der Dichtzarge hin- und herbewegbar sein. Des Weiteren kann ein vorderes Profil des Schachtschiebers in eine zentrale Öffnung der Dichtzarge hineinragen. Darüber hinaus kann das vordere Profil des Schachtschiebers in der zentralen Öffnung der Dichtzarge hin- und herbewegbar sein.

In Ausführungsformen können ein vorderer Abschnitt und ein hinterer Abschnitt der Spaltdichtung einander diametral in der Spaltdichtung gegenüberliegen. Ferner können der vordere Abschnitt und der hintere Abschnitt der Spaltdichtung im Wesentlichen parallel zueinander liegend in der Spaltdichtung eingerichtet sein. Des Weiteren können die beiden vorderen Dichtsitze und die beiden hinteren Dichtsitze sowohl der Dichtzarge als auch des Schachtschiebers zusammen, also alle vier Dichtsitze, im Wesentlichen zueinander parallel liegend im Schachtverschluss eingerichtet sein.

In Ausführungsformen können ein erster seitlicher Abschnitt und ein zweiter seitlicher Abschnitt der Spaltdichtung einander diametral in der Spaltdichtung gegenüberliegen. Ferner können der erste seitliche Abschnitt und der zweite seitliche Abschnitt der Spaltdichtung zueinander gewinkelt in der Spaltdichtung eingerichtet sein. Des Weiteren können jeweils nur einander direkt benachbarte, seitliche Dichtflächen der Dichtzarge und des Schachtschiebers, also jeweils nur genau zwei Dichtflächen, im Wesentlichen zueinander parallel liegend im Schachtverschluss eingerichtet sein.

Der Schachtschieber kann auf wenigstens einer Führungsschiene, insbesondere zwei Führungsschienen, hin- und herbewegbar gelagert sein. Die Führungsschiene kann eine Verlagerungseinrichtung zum Verlagern des Schachtschiebers in eine Richtung im Wesentlichen senkrecht zu seiner Hin-und-Herbewegbarkeit aufweisen. Solch eine Verlagerungseinrichtung ist insbesondere als eine Vertiefung oder Ausnehmung in der betreffenden Führungsschiene eingerichtet, wobei die Verlagerungseinrichtung bevorzugt eine Rampe aufweist, damit der Schachtschieber im Wesentlichen stetig auch senkrecht bezüglich seiner Hin-und-Herbewegbarkeit verlagert werden kann.

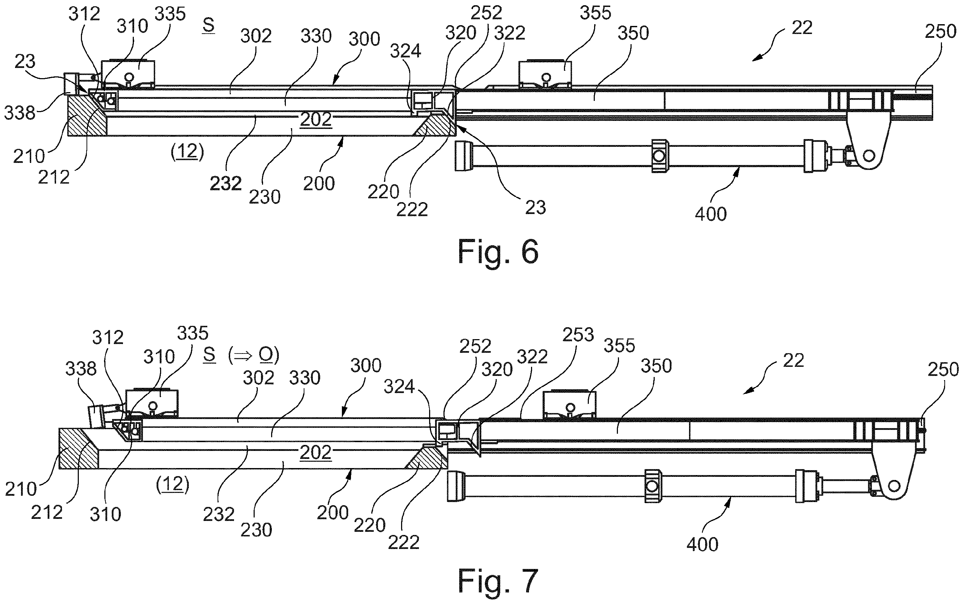

Der Schachtschieber kann mittels zweier Verlagerungseinrichtungen in einer Führungsschiene im Wesentlichen auf die und wieder von der Dichtzarge absetzbar sein. Dies erfolgt insbesondere in einer letzten Phase beim Schließen (Absetzbarkeit auf die Dichtzarge) und in einer ersten Phase beim Öffnen (Absetzbarkeit von der Dichtzarge, vgl. Fig. 6 nach 7) des Schachtverschlusses. Hierbei sind die Verlagerungseinrichtungen derart in den beiden Führungsschienen eingerichtet, dass ihr gegenseitiger Abstand z. B. einem gegenseitigen Abstand von Aufhängungen bzw. Rädern einer Seite des Schachtschiebers entspricht. Für die Absetzbarkeit auf die und wieder von der Dichtzarge weisen die Verlagerungseinrichtungen insbesondere hintere Rampen auf.

Die hierbei beteiligten vorderen und hinteren Aufhängungen oder vorderen und hinteren Räder können dabei ihren mechanischen Kontakt zu einem jeweiligen Grund ihrer Verlagerungseinrichtung verloren haben. D. h. der Schachtschieber drückt im Wesentlichen mit seiner gesamten Masse von oben auf die Dichtzarge, wobei ein mechanischer Kontakt zwischen dem Schachtschieber und der Dichtzarge bevorzugt im Wesentlichen ausschließlich über die einander betreffenden Dichtsitze und die einander betreffenden Dichtflächen des Schachtschiebers und der Dichtzarge erfolgt.

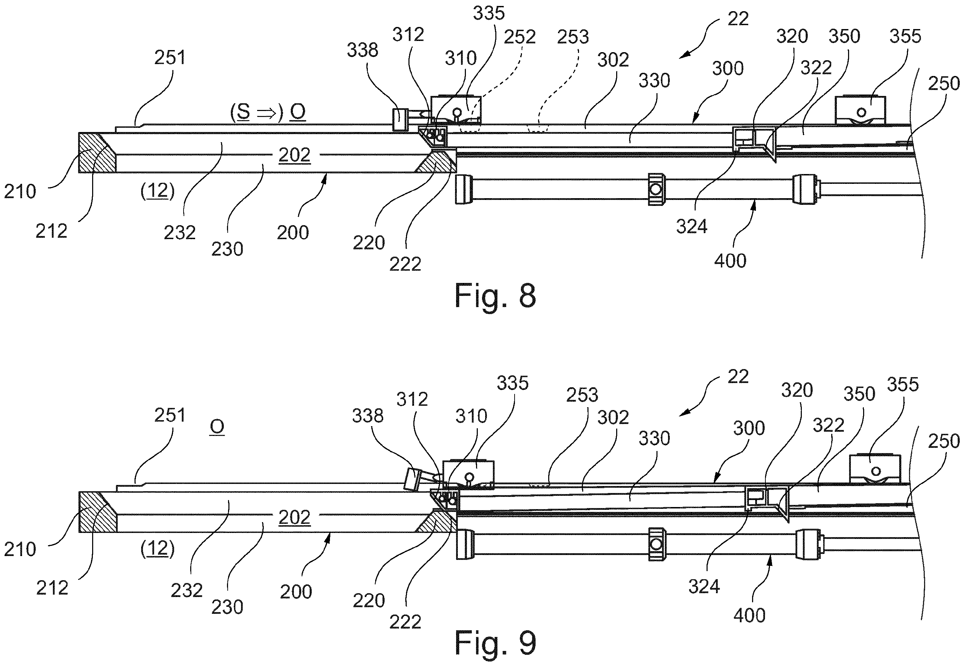

Der Schachtschieber kann in einer Offenstellung mittels einer Verlagerungseinrichtung in einer Führungsschiene einseitig auf die Dichtzarge absenkbar sein. Dies erfolgt insbesondere in einer letzten Phase beim Öffnen des Schachtverschlusses (vgl. Fig. 8 nach 9). Für das Absenken des vorderen Profils des Schachtschiebers auf die Dichtzarge, weist die Verlagerungseinrichtung insbesondere eine vordere Rampe auf. Die hierbei beteiligten vorderen Aufhängungen oder vorderen Räder können dabei ihren mechanischen Kontakt zu einem jeweiligen Grund ihrer Verlagerungseinrichtung verloren haben; d. h. das vordere Profil des Schachtschiebers sitzt auf dem hinteren Profil der Dichtzarge auf.

Ein hinteres Profil des Schachtschiebers kann eine in die zentrale Öffnung der Dichtzarge vorstehende Räumnase aufweisen, mittels welcher das hintere Profil der Dichtzarge von Verunreinigungen befreibar ist. Damit die Räumnase Verunreinigungen gut entfernen kann, ist ihre Höhe, also diejenige Dimension mit der sie in die zentrale Öffnung der Dichtzarge hineinsteht, derart bemessen, dass sie mit einem geringen Luftspalt über das hintere Profil des Schachtschiebers hinwegbewegbar ist (vgl. Fig. 7). Ferner kann die vordere Radaufhängung des Schachtschiebers vorne ein Räumschild oder einen Räumschlitten aufweisen, mittels welchem eine Führungsschiene des Schachtschiebers von Verunreinigungen befreibar ist.

Gemäß der Erfindung kann die Beschickungsöffnung als eine Beschickungsöffnung eines Schachts, eines Obergefäßes und/oder eines Schmelzofens ausgebildet sein. Die Dichtzarge kann als ein Bestandteil des Schachts, des Obergefäßes und/oder einer Positioniereinrichtung für einen Materialkorb ausgebildet sein. D. h. die Dichtzarge ist als Beschickungsöffnung des Schmelzofens ausgebildet.

Der Schachtschieber kann als eine Schachtschieberklappe ausgebildet sein, die zwei translatorische Freiheitsgrade besitzt. Die beiden Freiheitsgrade sind natürlich zwischen der Offenstellung und der Schließstellung eingeschränkt. D. h. die Schachtschieberklappe bewegt sich, z. B. ausgehend von der Offenstellung, zunächst im Wesentlichen in eine einzige translatorische Richtung. Zeitlich kurz vor dem Einnehmen der Schließstellung überlagert sich dieser ersten translatorischen Schließbewegung eine zweite translatorische Schließbewegung der Schachtschieberklappe, wobei die zweite translatorische Schließbewegung auf der ersten translatorischen Schließbewegung senkrecht steht. Ein Öffnen der Schachtschieberklappe erfolgt vice versa.

Mittels des Schachtverschlusses kann ein erfindungsgemäßes Verfahren zum Betreiben eines Schachtverschlusses durchgeführt werden. - Für das erfindungsgemäße Verfahren zum Betreiben eines Schachtverschlusses weist der Schachtverschluss einen Schachtschieber auf, der zwischen einer Offenstellung und einer Schließstellung des Schachtverschlusses hin- und herbewegbar ist, wobei in einem Betrieb des Schmelzofens und bei dem Schachtschieber in Schließstellung, der Schachtschieber mittels genau oder wenigstens eines Aktors aktiv auf wenigstens einen Dichtsitz (Definition vgl. o.) des Schachtverschlusses gedrückt wird.

Hierdurch kann wiederum wenigstens ein Dichtspalt (Spaltdichtung), insbesondere können zwei Dichtspalte (Spaltdichtung) im Schachtverschluss in dessen Schließstellung klein gehalten werden, was eine Energieeffizienz des Schmelzofens und dessen Emissionen verbessert. Natürlich ist eine Kraft auf den Schachtschieber dabei derart bemessen, dass der Schachtschieber nicht aus seinem wenigstens einen Dichtsitz über die Schließstellung hinaus gelangt, z. B. nicht aufgrund einer zu hohen Kraft aus dem Aktor aus seinem wenigstens einen Dichtsitz rutscht. Der Aktor kann dabei dem Schachtverschluss zugehörig sein.

Im Betrieb des Schmelzofens und beim Schachtschieber in Schließstellung kann der Schachtschieber mittels des Aktors translatorisch und/oder permanent auf den wenigstens einen Dichtsitz gedrückt werden. Ferner kann zusätzlich der Schachtschieber durch seine Masse passiv auf den wenigstens einen Dichtsitz drücken. Dabei kann der Schachtschieber durch seine Masse translatorisch und/oder permanent auf den wenigstens einen Dichtsitz drücken. - In Ausführungsformen kann der Dichtsitz an einer Dichtzarge des Schachtverschlusses eingerichtet sein. Ferner kann die Dichtzarge genau oder wenigstens einen oder genau zwei Dichtsitze umfassen. Des Weiteren können die zwei Dichtsitze als einander diametral gegenüberliegende Dichtsitze in der Dichtzarge eingerichtet sein.

In einer letzten Phase beim Schließen des Schachtschiebers kann der gesamte Schachtschieber auf die Beschickungsöffnung abgesenkt werden. In einer ersten Phase beim Öffnen des Schachtschiebers kann ein hinteres Profil der Dichtzarge oben von Verunreinigungen mittels eines hinteren Profils des Schachtschiebers z. B. mittels einer daran vorgesehenen Räumnase geräumt werden (vgl. Fig. 7). Vgl. o. die relativen Lageangeben 'vorne' 'hinten' und 'seitlich'.

In einer letzten Phase beim Öffnen des Schachtschiebers kann ein vorderes Profil des Schachtschiebers in Richtung der Beschickungsöffnung abgesenkt werden (vgl. Fig. 9). Hierbei wird z. B. ein Profil mit einem vorderen Dichtsitz des Schachtschiebers, in Richtung eines Profils mit einem hinteren Dichtsitz der Dichtzarge abgesenkt. Dies dient einer Spaltverkleinerung zwischen dem geöffneten Schachtschieber und dem darunter befindlichen hinteren Dichtsitz der Dichtzarge. Die Spaltverkleinerung dient einem Verlust von Stahlschrott und einem Vorbeugen einer Verunreinigung (Ablagerung von: Kleinteilen, Bruchteilen, Granulat, (Grob-)Staub etc.) an/auf dem hinteren Profil der Dichtzarge beim Beschicken des Schmelzofens.

In Ausführungsformen der Erfindung kann eine Führungsschiene des Schachtschiebers beim Schließen des Schachtschiebers mittels eines Räumschlittens oder eines Räumschilds geräumt werden. Ferner kann Ausführungsformen der Erfindung der Schachtverschluss als ein erfindungsgemäßer Schachtverschluss ausgebildet sein. - Die erfindungsgemäße Positioniereinrichtung weist einen Schachtverschluss auf, wobei der Schachtverschluss gemäß der Erfindung ausgebildet ist. Der erfindungsgemäße Schmelzofen weist eine Positioniereinrichtung und/oder einen Schachtverschluss auf, wobei die Positioniereinrichtung und/oder der Schachtverschluss gemäß der Erfindung ausgebildet ist, und/oder durch den Schmelzofen, die Positioniereinrichtung und/oder den Schachtverschluss ein Verfahren gemäß der Erfindung durchführbar ist und/oder durchgeführt wird.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/oder Gleichwertigkeit, eine Verallgemeinerung des Merkmals möglich ist.

In den lediglich beispielhaften Fig. zeigen:
die Fig. 1 und 2 in seitlichen Perspektivansichten, eine Ausführungsform einer erfindungsgemäßen Positioniereinrichtung für einen Schmelzofen, mit einem erfindungsgemäßen Schachtverschluss in einer Offenstellung (Fig. 1) und in einer Schließstellung (Fig. 2),
die Fig. 3 in einer in Längsrichtung zentral geschnittenen, perspektivischen Seitenansicht, den erfindungsgemäßen Schachtverschluss aus den Fig. 1 und 2 in dessen Schließstellung sowie zusätzlich einen Trichter der Positioniereinrichtung,
die Fig. 4 in einer Seitenansicht unter einer Weglassung des eigentlichen Schachtschiebers und dessen Betätigungseinrichtung, eine Führungsschiene der Dichtzarge zum Führen des Schachtschiebers zwischen dessen Offenstellung und Schließstellung,
die Fig. 5 eine zweidimensionale vordere Stirnseitenansicht auf die Positioniereinrichtung aus der Fig. 2 mit dem erfindungsgemäßen Schachtverschluss, und
die Fig. 6 bis 9 in zentral geschnittenen Längsseitenansichten, ein Öffnen des Schachtverschlusses aus dessen Schließstellung (Fig. 6) in dessen Offenstellung (Fig. 9) mit den Zwischenschritten: Anheben und Bewegen (Fig. 7) sowie Absenken einer Vorderkante (Fig. 8) des Schachtschiebers.

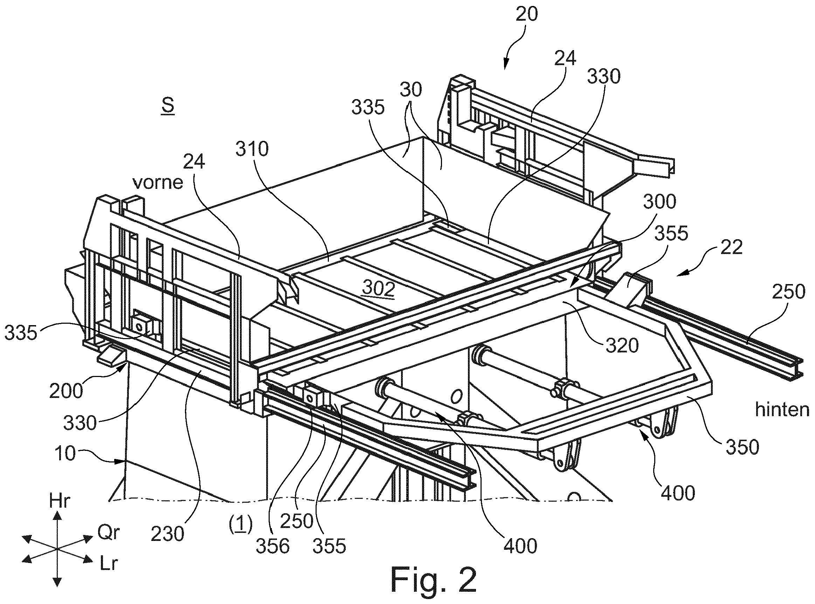

Die Erfindung ist im Folgenden anhand von Ausführungsbeispielen einer Ausführungsform einer Variante eines als Schiebeklappenverschlusses 22 ausgebildeten Schachtverschlusses 22 (vgl. Zeichnung) für einen insbesondere als einen Elektrolichtbogen-Schmelzofen 1 ausgebildeten Schmelzofen 1 (teilweise angedeutet in Fig. 2) näher erläutert. Vom Schmelzofen 1 ist in der Fig. 2 nur abschnittsweise ein Schacht 10, ein Obergefäß 10 bzw. ein Schacht 10 eines Obergefäßes dargestellt.

Obwohl die Erfindung detaillierter durch bevorzugte Ausführungsbeispiele näher beschrieben und illustriert ist, so ist die Erfindung nicht durch die offenbarten Ausführungsbeispiele eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen. In der Zeichnung sind nur diejenigen räumlichen Abschnitte eines Gegenstands der Erfindung dargestellt, welche für ein Verständnis der Erfindung notwendig sind.

Der Schachtverschluss 22 kann ein Bestandteil einer Positioniereinrichtung 20 (vgl. die Fig. 1 bis 3 und 5) für einen Materialkorb und zum Beschicken des Schmelzofens 1 sein. Die Positioniereinrichtung 20 kann z. B. eine Leitplanke 24 für den Materialkorb und einen Trichter 30 zum Einfüllen von Stahlschrott aufweisen. Es ist natürlich möglich, den Schachtverschluss 22 in Alleinstellung zu realisieren (vgl. die Fig. 6 bis 9).

Der Schachtverschluss 22 umfasst eine ortsfest bezüglich einer Beschickungsöffnung 12 des Schmelzofens 1 oder des Schachts 10 befindliche Dichtzarge 200, und einen gegenüber der Dichtzarge 200 translatorisch hin- und herbewegbaren, insbesondere einen als eine Schachtschieberklappe 300 ausgebildeten, Schachtschieber 300 zum Öffnen S => O und Schließen O => S der Beschickungsöffnung 12. Beim Öffnen S => O bewegt sich der Schachtschieber 300 aus seiner Schließstellung S in seine Offenstellung O. Und beim Schließen O => S bewegt sich der Schachtschieber 300 aus seiner Offenstellung O in seine Schließstellung S.

Die eigentliche Dichtzarge 200, also derjenige Bereich der Dichtzarge 200, welcher die Beschickungsöffnung 12 umrandet, weist eine zentrale Öffnung 202 über der Beschickungsöffnung 12 und vier in einem Rechteck angeordnete Profile 210, 220, 230, 230 auf. Ein in Längsrichtung Lr des Schachtverschlusses 22 vorderes Profil 210 weist einen vorderen Dichtsitz 212 (Dichtfläche), ein in Längsrichtung Lr hinteres Profil 220 weist einen hinteren Dichtsitz 222 (Dichtfläche) und zwei in Querrichtung Qr des Schachtverschlusses 22 einander gegenüberliegende Profile 230, 230 weisen seitliche Dichtflächen 232, 232 auf.

Der eigentliche Schachtschieber 300, also derjenige Bereich des Schachtschiebers 300, mittels welchem die Beschickungsöffnung 12 dichtbar ist, weist eine zentrale Dichtplatte 302 und vier in einem Rechteck angeordnete Profile 310, 320, 330, 330 auf. Ein in Längsrichtung Lr des Schachtverschlusses 22 vorderes Profil 310 weist einen vorderen Dichtsitz 312 (Dichtfläche), ein in Längsrichtung Lr hinteres Profil 320 weist einen hinteren Dichtsitz 322 (Dichtfläche) und zwei in Querrichtung Qr des Schachtverschlusses 22 einander gegenüberliegende Profile 330, 330 weisen seitliche Dichtflächen 332, 332 auf.

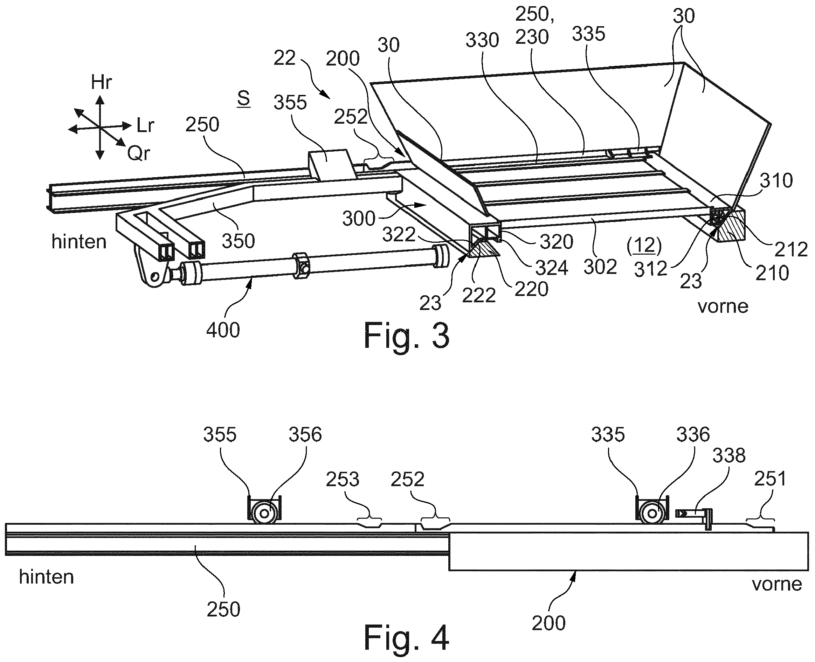

Gemäß der Ausführungsform sind alle vier Dichtsitze 212, 222; 312, 322 gegenüber einer Ebene der Beschickungsöffnung 12, oder gegenüber einer horizontalen Ebene und/oder einer vertikalen Ebene schief verlaufend im Schachtverschluss 22 eingerichtet. Ferner sind, vgl. die Fig. 3 und 6 bis 9, die zwei Dichtsitze 212, 222 der Dichtzarge 200 und die zwei Dichtsitze 312, 322 des Schachtschiebers 300 alle vier im Wesentlichen parallel zueinander im Schachtverschluss 20 eingerichtet (Offenstellung O und Schließstellung S).

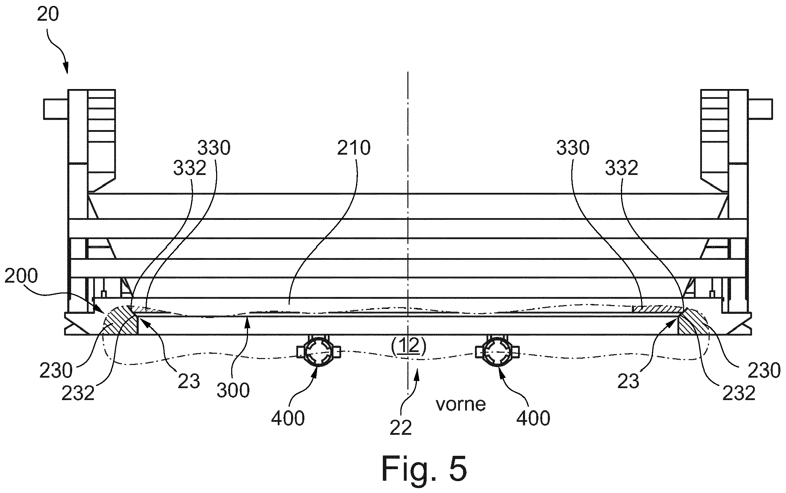

Gemäß der Ausführungsform sind alle vier Dichtflächen 232, 232; 332, 332 gegenüber einer Ebene der Beschickungsöffnung 12, oder gegenüber einer horizontalen Ebene und/oder einer vertikalen Ebene schief verlaufend im Schachtverschluss 22 eingerichtet. Ferner sind, vgl. die Fig. 5, jeweils einander betreffende Dichtflächen 232, 332; 232, 332 der Dichtzarge 200 und des Schachtschiebers 300 parallel zueinander im Schachtverschluss 20 eingerichtet (Offenstellung O und Schließstellung S). Ferner sind die einander betreffenden Dichtsitze 232, 332 einer Seite gegenüber den einander betreffenden Dichtsitzen 232, 332 der in Querrichtung Qr anderen Seite gewinkelt eingerichtet (Offenstellung O und Schließstellung S).

Die Dichtzarge 200 weist an ihren Querseiten wegstehende Führungsschienen 250, 250 auf, die sich auf ihren seitlichen Profilen 230, 230 fortsetzen. Auf den Führungsschienen 250, 250 können vordere Räder 336 und hintere Räder 356 abrollen, welche über vordere Radaufhängungen 335 und hintere Radaufhängungen 355 mechanisch fest mit dem Schachtschieber 300 verbunden sind. Hierbei sind die seitlichen Profile 330 des Schachtschiebers 300 fest mit den vorderen Radaufhängungen 335 und eine Betätigungseinrichtung 350, insbesondere ein Betätigungsrahmen 350, des eigentlichen Schachtschiebers 300 ist fest mit den hinteren Radaufhängungen 355 verbunden.

Der Schachtschieber 300 ist mittels seinen an seinen Radaufhängungen 335, 335; 355, 355 rotierbar aufgehängten Rädern 336, 336; 356, 356 entlang der Führungsschienen 250, 250 zwischen seiner Schließstellung S und seiner Offenstellung O translatorisch hin- und herbewegbar (vgl. Fig. 6 (Schließstellung S) nach Fig. 9 (Offenstellung 0)). Hierfür weist der Schachtverschluss 22 wenigstens einen hydraulischen, pneumatischen, mechanischen etc. Aktor 400, insbesondere einen Zylinderaktor 400, auf. Bevorzugt sind genau zwei Aktoren 400 vorgesehen. Die Aktoren 400 stützen sich dabei einerseits am Schmelzofen 1 und andererseits gelenkig an der Betätigungseinrichtung 350 ab.

Ferner können die Führungsschienen 250, 250 Verlagerungseinrichtungen 251, 251; 252, 252; 253, 253 aufweisen (vgl. Fig. 4), mittels welchen der Schachtschieber 300 über seine Räder 336, 336; 356, 356 in einer Richtung im Wesentlichen senkrecht zu seiner translatorischen Hin-und-Herbewegbarkeit etwas bewegt werden kann. Solch eine Verlagerungseinrichtung 251, 251; 252, 252; 253, 253 ist insbesondere als eine Vertiefung oder Ausnehmung ausgebildet, in welche das betreffende Rad 336, 356 hineinrollen und die an ihr vorgesehene Radaufhängung 335, 355 und somit einen entsprechenden Bereich des Schachtschiebers 300 absenken kann. Beim Herausrollen des betreffenden Rads 336, 356 erfolgt umgekehrtes.

So können die Führungsschienen 250, 250 vier Verlagerungseinrichtungen 251, 253; 251, 253 bevorzugt mit hinteren Rampen aufweisen, aufgrund welcher alle vier Räder 336, 336; 356, 356 im Wesentlichen synchron absenkbar und somit der Schachtschieber 300 beim Schließen O => S auf die Dichtzarge 200 absetzbar ist. Beim Öffnen O => S erfolgt umgekehrtes und der Schachtschieber 300 ist wieder von der Dichtzarge 200 absetzbar (vgl. Fig. 6 nach 7). Ferner können die Führungsschienen 250, 250 zwei Verlagerungseinrichtungen 252, 252 bevorzugt mit vorderen Rampen aufweisen, aufgrund welcher die zwei vorderen Räder 336, 336 im Wesentlichen synchron absenkbar und somit der Schachtschieber 300 beim Öffnen O => S lediglich vorne auf die Dichtzarge 200 absetzbar ist (vgl. Fig. 9). Beim Schließen O => S erfolgt umgekehrtes.

Das hintere Profil 320 des Schachtschiebers 300 kann eine in die Dichtzarge 200 vorstehende Räumnase 324 aufweisen, mittels welcher das hintere Profil 220 der Dichtzarge 200 von beim Öffnen O => S Verunreinigungen befreibar ist. Ferner kann die vordere Radaufhängung 335 des Schachtschiebers 300 vorne ein Räumschild oder einen Räumschlitten 338 aufweisen, mittels welchem die betreffende Führungsschiene 250 beim Schließen O => S von Verunreinigungen befreibar ist.

Beim translatorischen Hineinbewegen des Schachtschiebers 300 in die Dichtzarge 200 und/oder beim translatorischen Hinwegbewegen des Schachtschiebers 300 über die Dichtzarge 200 aus der Offenstellung O, d. h. beim Schließen O => S des Schachtschiebers 300 (vgl. Fig. 9 nach 6), bilden sich zunächst zwei in Querrichtung Qr einander diametral gegenüberliegende seitliche Spaltteildichtungen (23) zwischen den seitlichen Dichtflächen 232, 332; 232, 332 aus (vgl. Fig. 5), wobei diese Spaltteildichtungen (23) gewinkelt zueinander vorgesehen sind.

Beim endgültigen Schließen O => S des Schachtschiebers 300 bilden sich zwei in Längsrichtung Lr einander diametral gegenüberliegende Spaltteildichtungen (23) zwischen den Dichtsitzen 212, 312; 222, 322 aus (vgl. Fig. 3 und 6 nach 7) aus, wobei diese Spaltteildichtungen (23) parallel zueinander vorgesehen sind. - Hierdurch richtet sich gemäß der Erfindung eine im Wesentlichen vollständig umlaufende, ggf. unterbrochene (Eckbereiche), konische Spaltdichtung 23 zwischen dem Schachtschieber 300 der Dichtzarge 200 ein.

### Bezugszeichenliste

- 1: Schmelzofen, insbesondere Elektrolichtbogen-Schmelzofen

- 10: Schacht, Obergefäß
- 12: Beschickungsöffnung
- 20: Positioniereinrichtung
- 22: Schachtverschluss, insbesondere Schiebeklappenverschluss
- 23: (einrichtbare oder eingerichtete) Spaltdichtung zwischen der Dichtzarge 200 und dem Schachtschieber 300
- 24: Leitplanke
- 30: Trichter

- 200: Dichtzarge (ortsfest bezüglich des Schmelzofens)
- 202: (zentrale) Öffnung
- 210: (vorderes) Profil
- 212: (vorderer) Dichtsitz (Dichtfläche), bevorzugt parallel zu Dichtsitz 222 sowie den Dichtsitzen 312, 322
- 220: (hinteres) Profil
- 222: (hinterer) Dichtsitz (Dichtfläche), bevorzugt parallel zu Dichtsitz 212 sowie den Dichtsitzen 312, 322
- 230: (seitliches, erstes/zweites), zweifach vorhanden
- 232: (seitliche, erste/zweite) Dichtfläche, bevorzugt nicht parallel zur anderen seitlichen Dichtfläche 232
- 250: (Horizontal-)Führungsschiene, zweifach vorhanden
- 251: (Vertikal-)Verlagerungseinrichtung mit hinterer Rampe, wirkt bevorzugt im Wesentlichen gleichzeitig mit Verlagerungseinrichtung 253
- 252: (Vertikal-)Verlagerungseinrichtung mit vorderer Rampe
- 253: (Vertikal-)Verlagerungseinrichtung mit hinterer Rampe, wirkt bevorzugt im Wesentlichen gleichzeitig mit Verlagerungseinrichtung 251

- 300: Schachtschieber, insbesondere Schachtschieberklappe
- 302: (zentrale) Dichtplatte
- 310: (vorderes) Profil
- 312: (vorderer) Dichtsitz (Dichtfläche), bevorzugt parallel zu Dichtsitz 322 sowie den Dichtsitzen 212, 222
- 320: (hinteres) Profil
- 322: (hinterer) Dichtsitz (Dichtfläche), bevorzugt parallel zu Dichtsitz 312 sowie den Dichtsitzen 212, 222
- 324: Räumnase
- 330: (seitliches, erstes/zweites) Profil, zweifach vorhanden
- 332: (seitliche, erste/zweite) Dichtfläche, bevorzugt nicht parallel zur anderen seitlichen Dichtfläche 332
- 335: (vordere) (Rad-)Aufhängung
- 336: (vorderes) Rad
- 338: Räumschlitten
- 350: Betätigungseinrichtung, insbesondere Betätigungsrahmen
- 355: (hintere) (Rad-)Aufhängung
- 356: (hinteres) Rad

- 400: (hydraulischer, pneumatischer, mechanischer etc.) Aktor, insbesondere Zylinderaktor

- O: Offenstellung des Schachtverschlusses 20 bzw. des Schachtschiebers 230
- S: Schließstellung des Schachtverschlusses 20 bzw. des Schachtschiebers 230

- Hr: Hochrichtung des Schachtverschlusses 22
- Lr: Längsrichtung des Schachtverschlusses 22
- Qr: Querrichtung des Schachtverschlusses 22

## Patentansprüche

1. Schachtverschluss (22), insbesondere Schieberklappenverschluss (22), zum wiederholbaren Öffnen (S => O) und Schließen (O => S) einer Beschickungsöffnung (12) eines Schmelzofens, umfassend
eine an/auf der Beschickungsöffnung (12) einrichtbare Dichtzarge (200) und einen translatorisch zwischen einer Offenstellung (O) und einer Schließstellung (S) des Schachtverschlusses (22) gegenüber der Dichtzarge (200) hin- und herbewegbaren Schachtschieber (300) zum Öffnen (S => O) und Schließen (O => S) der Beschickungsöffnung (12), **dadurch gekennzeichnet, dass**
für die und/oder in der Schließstellung (S) wenigstens ein Abschnitt einer zwischen der Dichtzarge (200) und dem Schachtschieber (300) einrichtbaren und/oder eingerichteten Spaltdichtung (23) gegenüber einer Ebene der Beschickungsöffnung (12) schief verläuft.

2. Schachtverschluss (22) gemäß vorhergehendem Anspruch, **dadurch gekennzeichnet, dass** für die und/oder in der Schließstellung (S) genau zwei, wenigstens zwei oder im Wesentlichen alle Abschnitte der zwischen der Dichtzarge (200) und dem Schachtschieber (300) einrichtbaren und/oder eingerichteten Spaltdichtung (23) gegenüber einer Ebene der Beschickungsöffnung (12) schief verlaufen, und/oder
für die und/oder in der Schließstellung (S) der betreffende Abschnitt oder die betreffenden Abschnitte der zwischen der Dichtzarge (200) und dem Schachtschieber (300) einrichtbaren und/oder eingerichteten Spaltdichtung (23) gegenüber einer horizontalen Ebene und gegenüber einer vertikalen Ebene schief verläuft oder verlaufen.

3. Schachtverschluss (22) gemäß einem der vorhergehenden Ansprüche, **dadurch gekennzeichnet, dass** die eigentliche Dichtzarge (200) und der eigentliche Schachtschieber (300) im Wesentlichen rechteckig ausgebildet sind, und/oder
in der Schließstellung (S) einander direkt benachbarte Ränder (212, 222, 232, 232; 312, 322, 332, 332), Dichtflächen (212, 222, 232, 232; 312, 322, 332, 332) und/oder Dichtsitze (212, 222; 312, 322) der Dichtzarge (200) und des Schachtschiebers (300) zueinander im Wesentlichen komplementär ausgebildet sind.

4. Schachtverschluss (22) gemäß einem der vorhergehenden Ansprüche, **dadurch gekennzeichnet, dass**:
• der Schachtschieber (300) mit seiner Dichtplatte (302) über einem hinteren Profil (220) der Dichtzarge (200) im Schachtverschluss (22) eingerichtet ist,
• die Dichtplatte (302) des Schachtschiebers (300) über dem hinteren Profil (220) der Dichtzarge (200) hin- und herbewegbar ist,
• ein vorderes Profil (310) des Schachtschiebers (300) in eine zentrale Öffnung (202) der Dichtzarge (200) hineinragt, und/oder
• das vordere Profil (310) des Schachtschiebers (300) in der zentralen Öffnung (202) der Dichtzarge (200) hin-und herbewegbar ist.

5. Schachtverschluss (22) gemäß einem der vorhergehenden Ansprüche, **dadurch gekennzeichnet, dass**:
• ein vorderer Abschnitt (212/312) und ein hinterer Abschnitt (222/322) der Spaltdichtung (23) einander diametral in der Spaltdichtung (23) gegenüberliegen,
• der vordere Abschnitt (212/312) und der hintere Abschnitt (222/322) der Spaltdichtung (23) im Wesentlichen parallel zueinander liegend in der Spaltdichtung (23) eingerichtet sind, und/oder
• die beiden vorderen Dichtsitze (212, 312) und die beiden hinteren Dichtsitze (222, 322) der Dichtzarge (200) und des Schachtschiebers (300) zusammen im Wesentlichen zueinander parallel liegend im Schachtverschluss (22) eingerichtet sind.

6. Schachtverschluss (22) gemäß einem der vorhergehenden Ansprüche, **dadurch gekennzeichnet, dass**:
• ein erster seitlicher Abschnitt (232/332) und ein zweiter seitlicher Abschnitt (232/332) der Spaltdichtung (23) einander diametral in der Spaltdichtung (23) gegenüberliegen,
• der erste seitliche Abschnitt (232/332) und der zweite seitliche Abschnitt (232/332) der Spaltdichtung (23) zueinander gewinkelt in der Spaltdichtung (23) eingerichtet sind, und/oder
• einander direkt benachbarte, jeweils seitliche Dichtflächen der Dichtzarge (200) und des Schachtschiebers (300) im Wesentlichen zueinander parallel liegend im Schachtverschluss (22) eingerichtet sind.

7. Schachtverschluss (22) gemäß einem der vorhergehenden Ansprüche, **dadurch gekennzeichnet, dass**:
• der Schachtschieber (300) auf wenigstens einer Führungsschiene (250), insbesondere zwei Führungsschienen (250, 250), hin- und herbewegbar gelagert ist,
• die Führungsschiene (250) eine Verlagerungseinrichtung (251, 252, 253) zum Verlagern des Schachtschiebers (300) in eine Richtung im Wesentlichen senkrecht zu seiner Hin-und-Herbewegbarkeit aufweist, und/oder
• der Schachtschieber (300) mittels zweier Verlagerungseinrichtungen (251, 253) in einer Führungsschiene (250) im Wesentlichen auf die und wieder von der Dichtzarge (200) absetzbar ist, und/oder
• der Schachtschieber (300) in einer Offenstellung (O) mittels einer Verlagerungseinrichtung (252) in einer Führungsschiene (250) einseitig auf die Dichtzarge (200) absenkbar ist.

8. Schachtverschluss (22) gemäß einem der vorhergehenden Ansprüche, **dadurch gekennzeichnet, dass** ein hinteres Profil (320) des Schachtschiebers (300) eine in die zentrale Öffnung (202) der Dichtzarge (200) vorstehende Räumnase (324) aufweist, mittels welcher das hintere Profil (220) der Dichtzarge (200) von Verunreinigungen befreibar ist, und/oder
die vordere Radaufhängung (355) des Schachtschiebers (300) vorne ein Räumschild oder einen Räumschlitten (338) aufweist, mittels welchem eine Führungsschiene (350) des Schachtschiebers (300) von Verunreinigungen befreibar ist.

9. Schachtverschluss (22) gemäß einem der vorhergehenden Ansprüche, **dadurch gekennzeichnet, dass**:
• die Beschickungsöffnung (12) als eine Beschickungsöffnung (12) eines Schachts (10), eines Obergefäßes (1) und/oder eines Schmelzofens ausgebildet ist,
• die Dichtzarge (200) als ein Bestandteil des Schachts (10), des Obergefäßes (1) und/oder einer Positioniereinrichtung (20) für einen Materialkorb ausgebildet ist,
• der Schachtschieber (300) als eine Schachtschieberklappe (300) ausgebildet ist, die zwei translatorische Freiheitsgrade besitzt, und/oder
• mittels des Schachtverschlusses (22) ein Verfahren zum Betreiben eines Schachtverschlusses (22) gemäß einem der nachfolgenden Ansprüche durchführbar ist.

10. Verfahren zum Betreiben eines Schachtverschlusses (22), insbesondere eines Schieberklappenverschlusses (22), zum wiederholbaren Schließen (O => S) und Öffnen (S => O) einer Beschickungsöffnung (12) eines Schmelzofens; wobei
der Schachtverschluss (22) einen Schachtschieber (300) aufweist, der zwischen einer Offenstellung (O) und einer Schließstellung (S) des Schachtverschlusses (22) hin- und herbewegbar ist, **dadurch gekennzeichnet, dass**
in einem Betrieb des Schmelzofens und bei dem Schachtschieber (300) in Schließstellung (S), der Schachtschieber (300) mittels wenigstens eines Aktors (400) aktiv auf wenigstens einen Dichtsitz (212, 222) des Schachtverschlusses (22) gedrückt wird.

11. Verfahren gemäß vorhergehendem Anspruch, **dadurch gekennzeichnet, dass** im Betrieb des Schmelzofens und beim Schachtschieber (300) in Schließstellung (S):
• der Schachtschieber (300) mittels des Aktors (400) translatorisch und/oder permanent auf den wenigstens einen Dichtsitz (212, 222) gedrückt wird,
• der Schachtschieber (300) ferner durch seine Masse passiv auf den wenigstens einen Dichtsitz (212, 222) drückt, und/oder
• der Schachtschieber (300) durch seine Masse translatorisch und/oder permanent auf den wenigstens einen Dichtsitz (212, 222) drückt.

12. Verfahren gemäß einem der vorhergehenden Ansprüche, **dadurch gekennzeichnet, dass**:
• der Dichtsitz (212, 222) an einer Dichtzarge (200) des Schachtverschlusses (22) eingerichtet ist,
• die Dichtzarge (200) wenigstens einen oder genau zwei Dichtsitze (212, 222) umfasst, und/oder
• die zwei Dichtsitze (212, 222) als einander diametral gegenüberliegende Dichtsitze (212, 222) in der Dichtzarge (200) eingerichtet sind.

13. Verfahren gemäß einem der vorhergehenden Ansprüche, **dadurch gekennzeichnet, dass**:
• in einer letzten Phase beim Schließen (O => S) des Schachtschiebers (300), der gesamte Schachtschieber (300) auf die Beschickungsöffnung (12) abgesenkt wird,
• in einer ersten Phase beim Öffnen (S => O) des Schachtschiebers (300), ein hinteres Profil (220) der Dichtzarge (200) oben von Verunreinigungen mittels eines hinteren Profils (220) des Schachtschiebers (300) geräumt wird,
• in einer letzten Phase beim Öffnen (S => O) des Schachtschiebers (300), ein vorderes Profil (310) des Schachtschiebers (300) in Richtung der Beschickungsöffnung (12) abgesenkt wird,
• eine Führungsschiene (350) des Schachtschiebers (300) beim Schließen (O => S) des Schachtschiebers (300) mittels eines Räumschlittens (338) oder eines Räumschilds geräumt wird, und/oder
• der Schachtverschluss (22) gemäß einem der vorhergehenden Ansprüche ausgebildet ist.

14. Positioniereinrichtung (20) für einen Materialkorb und zum Beschicken eines Schmelzofens, insbesondere eines Schachts (10) eines Schmelzofens, wobei die Positioniereinrichtung (20) einen Schachtverschluss (22) aufweist, **dadurch gekennzeichnet, dass**
der Schachtverschluss (22) gemäß einem der vorhergehenden Ansprüche ausgebildet ist.

15. Schmelzofen, insbesondere Elektrolichtbogen-Schmelzofen, wobei der Schmelzofen eine Positioniereinrichtung (20) und/oder einen Schachtverschluss (22) aufweist, **dadurch gekennzeichnet, dass**
die Positioniereinrichtung (20) und/oder der Schachtverschluss (22) gemäß einem der vorhergehenden Ansprüche ausgebildet ist, und/oder
durch den Schmelzofen, die Positioniereinrichtung (20) und/oder den Schachtverschluss (22) ein Verfahren gemäß einem der vorhergehenden Ansprüche durchführbar ist und/oder durchgeführt wird.
